# EUROPEAN PATENT SPECIFICATION

(11) **EP 2 747 322 B1**
(45) Date of publication and mention of the grant of the patent: **21.09.2016**
(21) Application number: 12306633.4
(22) Date of filing: 20.12.2012
(51) Int. Cl.: H04J 14/02

(54) **WDM OPTICAL PACKET SWITCHING BLOCK**
OPTISCHER WDM-PAKETVERMITTLUNGSSCHALTBLOCK
BLOC DE COMMUTATION DE PAQUETS OPTIQUES WDM

(43) Date of publication of application: 25.06.2014
(73) Proprietor: ALCATEL LUCENT, 92100 Boulogne-Billancourt (FR)
(72) Inventor: Zami, Thierry, 91620 NOZAY (FR)
(74) Representative: Berthier, Karine

(56) References cited:
- EP-A2- 1 657 953
- US-A1- 2007 116 462
- US-A1- 2010 142 961
- US-A1- 2012 183 293

## Description

### Field of the invention

The invention relates to the technical field of optical communication systems employing a packet granularity.

### Background

Optical packet switching networks employing Wavelength Division Multiplexing (WDM) provide flexibility, high capacity and efficient use of the bandwidth through multiplexing techniques in both time and wavelength. An optical packet add and drop multiplexer (OPADM) for a WDM network makes it possible to perform fundamental functions such as optical packet insertion, optical packet extraction and transparent forwarding of transit traffic on each of a plurality of wavelength channels. The optical transparency of the transit path limits dramatically the number of transponders required to make such equipment.

Examples of optical switching nodes employing an OPADM architecture are described in FR-A-2950765 and EP-A-2160045.

US 2010/142961 A1 discloses a system for dynamically adding/dropping wavelength in a reconfigurable optical add/drop multiplexer (ROADM) transport network. The system includes at least one optical transponder, a plurality of optical fan-out devices, each arranged to receive an input signal from a network degree and coupled to at least one of a plurality of optical fan-in devices, each optical fan-in device arranged to output a signal to a network degree, the optical fan-out devices comprising at least one wavelength selective switch and the optical fan-in devices comprising at least one wavelength selective switch, the optical fan-out devices and optical fan-in devices being connected so as to enable signals input from each of the plurality of network degrees to be switched to another network degree of the plurality of network degrees; a plurality of demultiplexers for locally dropping selected wavelengths; a plurality of multiplexers for locally adding selected wavelengths; and at least one fiber switch interposed between the at least one optical transponder and the plurality of demultiplexers and multiplexers. The fiber switch is coupled to wavelengths and degrees that are allocated for a bandwidth-on-demand application. Other configurations include additional fan-in and fan-out devices interposed between a mux/demux assembly and the optical transponders to support wavelength redistribution applications. EP1657953 A2 discloses an optical transmitting apparatus with an increased number of paths. US 2007/116462 A1 discloses a device for optically switching between upstream and downstream optical lines, with node signature addition for tracking optical connection paths. US2012/183293 A1 discloses an optical packet switching device.

### Summary

In an embodiment, the invention provides a WDM optical packet switching block, comprising:
a first multiport-to-multiport Wavelength Selective Switch (WSS) module comprising:
   a plurality of WDM input ports each adapted to receive an input WDM signal comprising optical packets carried on a plurality of wavelength channels, and
   a plurality of transit-side ports each allocable to a wavelength channel,
a plurality of packet transit paths, each packet transit path comprising:
   an input section connected to a respective transit-side port of the first multiport-to-multiport WSS module for receiving optical packets carried on the allocated wavelength channel,
   a selective element switchable to selectively pass or block an individual optical packet carried on the allocated wavelength channel and received in the input section, and
   an output section for transmitting optical packets passed by the selective element,
      wherein the first multiport-to-multiport WSS module is operable to route independently each wavelength channel of each input WDM signal between the corresponding WDM input port and any one of the transit-side ports, wherein the first multiport-to-multiport WSS module is configured to independently allocate a wavelength channel to each of the transit-side ports, so that the wavelength channels allocated to two transit-side ports may be different or identical, and
   a second multiport-to-multiport WSS module comprising:
      a plurality of transit-side ports, the output section of each packet transit path being connected to a respective transit-side port of the second multiport-to-multiport WSS for transmitting the optical packets passed by the selective element on the allocated wavelength channel, and
      a plurality of WDM output ports each adapted to pass an output WDM signal comprising optical packets carried on a plurality of wavelength channels,
wherein the second multiport-to-multiport WSS module is operable to route independently the wavelength channel allocated to a transit path between the corresponding transit-side port and any one of the WDM output ports, wherein the second multiport-to-multiport WSS module is configured to route the wavelength channel received each of the transit-side ports to a selected one of the WDM output ports.

According to embodiments, such an optical packet switching block can comprise one or more of the features below.

In an embodiment, the first multiport-to-multiport WSS module is configured to allocate a plurality of identical wavelength channels coming from different ones of the WDM input ports to a plurality of the transit-side ports of the first multiport-to-multiport WSS module, and
wherein the second multiport-to-multiport WSS module is configured to route the plurality of identical wavelength channels from the corresponding transit-side ports of the second multiport-to-multiport WSS module to different ones of the WDM output ports.

In an embodiment, a multiport-to-multiport WSS module comprises:
a plural number N of 1-by-M wavelength selective switches, each 1-by-M wavelength selective switch comprising a common port arranged at a WDM port of the multiport-to-multiport WSS module and a plural number M of selectable ports,
a plural number M of N-by-1 spatial selectors, each N-by-1 spatial selector comprising a common port arranged at a transit-side port of the multiport-to-multiport WSS module and a plural number N of selectable ports, and
a plural number MxN of optical links connecting the M selectable ports of each 1-by-M wavelength selective switch to the M spatial selectors, so as to produce a plurality of optical paths as a function of a configuration state of the spatial selectors and wavelength selective switches, each optical path adapted to carry optical signals on a plurality of wavelength channels between a selected one of the WDM ports and a selected one of the transit-side ports.

In an embodiment, a multiport-to-multiport WSS module comprises a fully non-blocking N-by-M wavelength selective switch comprising a plural number N of WDM ports and a plural number M of transit-side ports, wherein the fully non-blocking N-by-M wavelength selective switch is capable of simultaneously passing a plurality of selected wavelength channels between different ones of the WDM ports and one of the transit ports.

A drop module including one or more burst-mode optical receivers may be provided to make read-accesses to the WDM layer, i.e. extract and demodulate optical packets. An add module including one or more burst-mode optical transmitters may be provided to make write-accesses to the WDM layer, i.e. generate and insert optical packets. Such add and drop modules may be arranged in a number of ways, within or outside of the WDM optical packet switching block.

In an embodiment, each packet transit path further comprises a dropping optical coupler arranged in the input section to pass an optical packet entering the packet transit path to an optical packet receiver adapted to demodulate the optical packet.

In an embodiment, the WDM optical packet switching block further comprises a drop-side optical switch comprising a plurality of input ports connected to a plurality of the dropping optical couplers and at least one output port connected to an optical packet receiver, wherein the drop-side optical switch is reconfigurable to successively pass optical packets coming from different ones of the packet transit paths to the optical packet receiver.

In an embodiment, each packet transit path further comprises an adding optical coupler arranged in the output section to pass an optical packet from an optical packet transmitter to the output section of the packet transit path.

In an embodiment, the WDM optical packet switching block further comprises an add-side optical switch comprising a plurality of output ports connected to a plurality of the adding optical couplers and at least one input port connected to an optical packet transmitter, wherein the add-side optical switch is reconfigurable to successively pass optical packets coming from the optical packet transmitter to different ones of the packet transit paths.

In an embodiment, the WDM optical packet switching block further comprises a circuit-mode transit path connecting a transit-side port of the first multiport-to-multiport WSS module to a transit-side port of the second multiport-to-multiport WSS module for passing one or more circuit-mode optical signals carried on one or more wavelength channels.

In an embodiment, the selective element comprises a semiconductor optical amplifier arranged as an optical gate on the corresponding packet transit path.

In an embodiment, the invention also provides an optical network element for a WDM network, the optical network element comprising:
a WDM optical packet switching block,
a plurality of WDM inputs connectable to a plurality of adjacent nodes of the network for receiving optical signals on a plurality of wavelength channels, and
a plurality of WDM outputs connectable to the plurality of adjacent nodes for passing optical signals on the plurality of wavelength channels to the adjacent nodes of the network,
wherein the WDM input ports of the WDM optical packet switching block are each connected to a WDM input of the optical network element and wherein the WDM output ports of the WDM optical packet switching block are each connected to a WDM output of the optical network element.

In an embodiment, the optical network element further comprises a second WDM optical packet switching block,
a distributing component arranged at each WDM input of the optical network element, the distributing component comprising first and second outputs for distributing the optical signals received at the WDM input to a WDM input port of the first WDM optical packet switching block and to a WDM input port of the second WDM optical packet switching block, and
a combining component arranged at each WDM output of the optical network element, the combining component comprising first and second inputs for combining optical signals received from a WDM output port of the first WDM optical packet switching block and from a WDM output port of the second WDM optical packet switching block.

In an embodiment, the distributing component arranged at each WDM input and/or the combining component arranged at each WDM output comprises a wavelength selective switch.

In an embodiment, the optical network element further comprises a transparent circuit-mode transit path arranged to connect an output of a distributing component to an input of a combining component for passing circuit-mode optical signals carried on a plurality of wavelength channels.

In an embodiment, the WDM optical packet switching block comprises a single multiport-to-multiport WSS module comprising a plurality of transit-side ports and a plurality of WDM ports, the multiport-to-multiport WSS module being operated in a bidirectional manner to provide the first multiport-to-multiport WSS module in a first direction of operations and the second multiport-to-multiport WSS module in a second direction of operations,
wherein each packet transit path further comprises an optical circulator having a bidirectional port connected to a corresponding transit-side port of the single multiport-to-multiport WSS module, an output port connected to the input section and an input port connected to the output section, and
wherein the optical network element further comprises an optical circulator associated to each WDM port of the multiport-to-multiport WSS module, the optical circulator having a bidirectional port connected to the WDM port of the multiport-to-multiport WSS module, an input port connected to a WDM input of the optical network element, and an output port connected to a WDM output of the optical network element.

Aspects of the invention stem from the observation that more flexible packet switching architectures may be obtained by employing multiport-to-multiport WSS modules that overcome the limitations of 1-by-N wavelength selective switches.

Aspects of the invention are based on the idea of providing transparent optical packet switching nodes that offer some or all of the following features:
- Progressive scalability or suitability for pay-as-you grow deployment,
- Low contention or contentionless operations,
- Colorless ports, i.e. ability to direct any wavelength from a given WDM port to a given receiver in the drop device or from a given transmitter in the add device to a given WDM port,
- Multidirectional ports, i.e. ability to direct signals from any node input to a given port in the drop device or ability to direct signals from a given port in the add device to any node output,
- High add and drop capacity,
- High cascadability resulting from low impact on transit traffic,
- High connectivity degree,
- Cost-efficiency,
- Compact footprint.

### Brief description of the drawings

These and other aspects of the invention will be apparent from and elucidated with reference to the embodiments described hereinafter, by way of example, with reference to the drawings.
Figure 1 is a functional representation of an OPADM block in accordance with a first embodiment.
Figure 2 is a functional representation of an OPADM block in accordance with a second embodiment.
Figure 3 is a functional representation of an NxM WSS module that may be used in an OPADM block.
Figure 4 is a functional representation of a multi-degree optical packet router employing a plurality of OPADM blocks in accordance with a first embodiment.
Figure 5 is a functional representation of a multi-degree optical packet router employing a plurality of OPADM blocks in accordance with a second embodiment.

### Detailed description of the embodiments

In a transparent WDM optical network, WDM transparent optical switching nodes are connected by optical links to form a given topology. The term "transparent" is applied to a transmission system in which the signal remains optical without being converted into an electronic signal when passing through a network routing node. Transparency can exist in some or all of the switching nodes of an optical network.

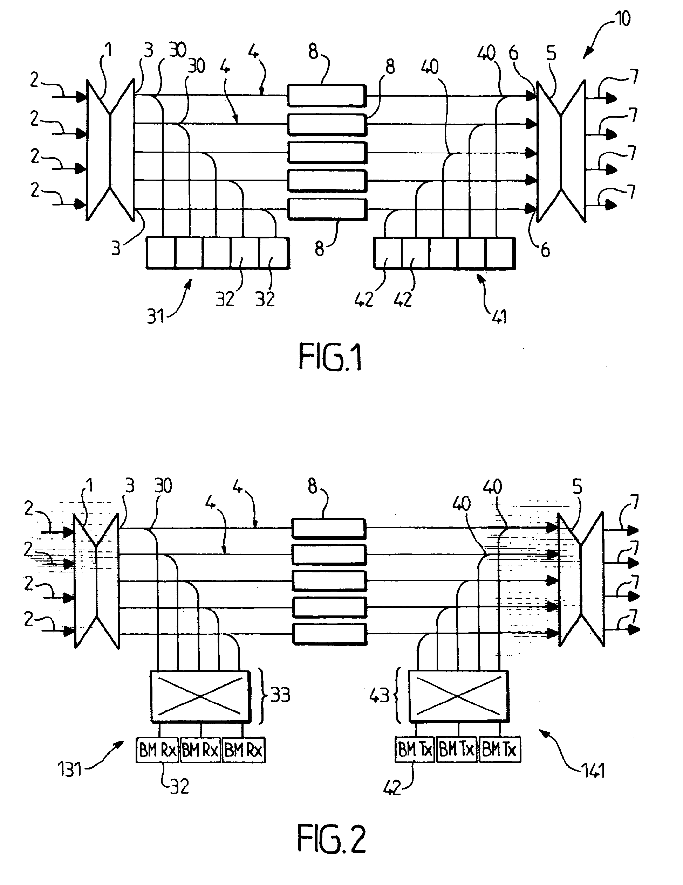

With reference to Figure 1, an OPADM block 10 that may be used as an optical packet switching node in a transparent WDM optical network will now be described. The OPADM block 10 comprises a first N-by-M wavelength selective switch module 1 where N and M are integer numbers higher than 1, i.e. N=4 and M=5 on Figure 1. The N WDM input ports 2 of WSS module 1 are each adapted to receive a WDM packet traffic, i.e. optical bursts carried on a plurality of wavelength channels. In embodiments, each WDM input ports 2 is arranged to receive traffic from a respective adjacent node in the network. On the other side of WSS module 1, the M WDM output ports 3 are each connected to a transit path 4 that goes from WSS module 1 to a second N-by-M wavelength selective switch module 5 that is connected in a reversed manner, i.e. the M WDM input ports 6 are each connected to a transit path 4 whereas the N WDM output ports 7 of WSS module 5 are each adapted to transmit a WDM packet traffic, i.e. optical bursts carried on a plurality of wavelength channels. In embodiments, each WDM output port 7 is arranged to forward traffic to a respective adjacent node in the network.

The N-by-M wavelength selective switch modules 1 and 5 may be implemented in several ways. The functionality of an N-by-M wavelength selective switch module makes it possible to receive optical packets on one or more wavelength channels at each WDM input port. The wavelength channels received at any given WDM input port are independently selectable and independently switchable to any of the WDM output ports. In other words, an input port may be configured to pass or block each wavelength channel independently and, for those wavelength channels which are passed, to pass them to independently selected output ports.

In all implementations, the switching of wavelength channels within the N-by-M wavelength selective switch module is configured so that no spectral collisions are generated at any WDM output port. In other words, an output port receives at most a single instance of each wavelength channel, whereas two input ports passing two signals on a same wavelength channel are configured to pass those two signals to two different output ports.

In an embodiment, the N-by-M WSS module is an integrated non-blocking component that exhibits no wavelength contention as described by Nicolas K. Fontaine, Roland Ryf, David T. Neilson , "N×M Wavelength Selective Crossconnect with Flexible Passbands", Paper PDP5B2, Conference OFC/NFOEC'2012, March 2012.

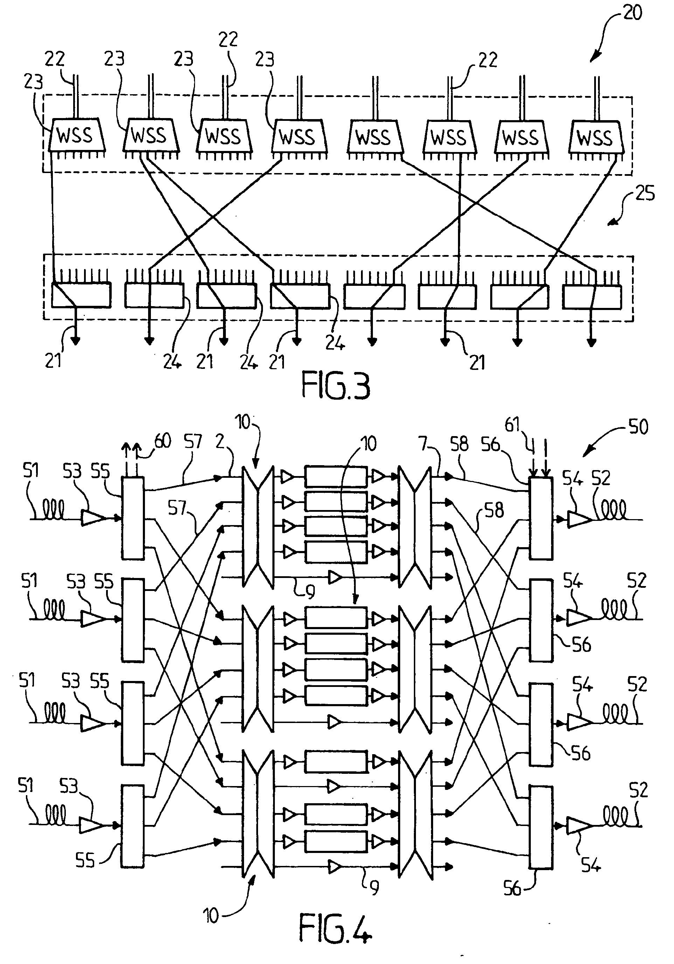

Another embodiment of an N-by-M wavelength selective switch module 20 is schematically depicted on Figure 3, where N=M=8. The N-by-M WSS module 20 comprises M transit-side ports 21 on the lower side and N WDM ports 22 on the upper side. The N-by-M WSS module 20 comprises a 1-by-M WSS 23 at each input port 22 and an N-by-1 optical selector 24 at each transit-side port 21. N times M optical links 25 connect each 1-by-M WSS 23 to all optical selectors 24. For the sake of clarity, only some of the optical links 25 are illustrated on Figure 3.

The 1-by-M WSS refers to a piece of equipment that may be used as a reconfigurable multiplexer or a reconfigurable demultiplexer. When it is acting as a multiplexer, the plurality of M selectable ports serve as inputs, and the common port serves as an output. The 1-by-M wavelength selective switch comprises grating components capable of separating a WDM optical signal received at an input port into a plurality of beams corresponding to predefined non-overlapping spectral bands, and light steering means capable of steering independently the optical beam corresponding to a respective spectral band either towards the output or towards an absorber. Thereby, the spectral component of the incoming WDM signal belonging to a wavelength channel can be switched as a whole, i.e. either passed to the common output or blocked. The same function is achieved for each wavelength channel at each input. The switching or steering of beams within the 1-by-M WSS is produced by spatial light manipulation organs, such as micromirrors activated by MEMS micro-actuators or liquid crystal cells. In addition to selecting the wavelength channels, these organs may be capable of adjusting the signal attenuation for each wavelength channel. In this manner, each WSS 23 serves to both select the wavelength channels that must be passed to a given WDM port 22 and to adjust their output power channel-by-channel.

Similarly, when the 1-by-M WSS is acting as a demultiplexer, the common port serves as an input and the M selectable ports serve as outputs. Hence, in an implementation of WSS module 1 in accordance with Figure 3, the inputs 22 of the 1-by-M WSSs 23 are the WDM ports 2. In an implementation of WSS module 5 in accordance with Figure 3, the outputs 22 of the 1-by-M WSSs 23 are the WDM ports 7.

As a consequence, the N-by-M wavelength selective switch module 20 is capable of generating several independent paths for passing simultaneously a plurality of signals carried on a same wavelength channel or overlapping channels, i.e. up to 8 instances in the illustrated embodiment. A limitation of WSS module 20 consists in that all optical signals passed to or from a given transit-side port 21 shall originate from or go to a single WDM port 22. This is inherent to the operations of optical selectors 24 which are non-colored space switches. However, that limitation is entirely compatible with the operations of the OPADM block 10, as will be further explained.

The above embodiments of an N-by-M WSS module are to be contrasted with an arrangement comprising an N-by-1 WSS connected back-to-back with a 1-by-M WSS through a single optical fiber. In such an arrangement, the single optical link makes it possible to forward only a single instance of a given wavelength channel among all signals received at all the input ports, so that no two output ports may receive optical signals carried on identical wavelength channels at a same time.

The width of the spectral bands switched by the WSSs 23 depends on the design of the WSSs. Preferably, this width is selected to match a single wavelength channel of a standard ITU grid. Alternatively, this width is selected as a multiple of a standard ITU channel spacing. Some advanced WSSs can also provide an adaptable filtering function with adjustable spectral width. This feature makes it possible to implement flexible optical frequency grids in the WDM network, i.e. so-called gridless signals. For the sake of clarity, the filter width of the WSSs 23 corresponds to a single wavelength channel in the above described example.

Turning back to Figure 1, the N-by-M WSS module 1 in the OPADM block 10 is configured to allocate a single wavelength channel and a single input port 2 to each transit path 4. Namely, the transit path 4 at any given instant receives only optical packets carried on the selected wavelength channel from the selected input port 2. However, the above allocation can be reconfigured in the course of time, e.g. to cope with evolution of the traffic map. The N-by-M WSS module 5 is configured to route the optical signal received from each transit path 4 to a selected output port 7, provide that no spectral collisions are generated.

The details of a transit path 4 will now be described. A transit path 4 serves to pass packet traffic transparently between the WSS modules 1 and 5. An optical gate 8, e.g. a Semiconductor Optical amplifier (SOA), makes it possible to selectively erase individual packets, e.g. to make room for added traffic on the allocated wavelength channel.

As shown on Figure 1, a transit path 4 comprises also a drop coupler 30 arranged upstream of the optical gate 8 to pass the optical packets to a drop module 31 comprising burst mode receivers 32 for demodulating the dropped traffic. Further, an add coupler 40 is arranged downstream of the optical gate 8 to insert optical packets from an add module 41 comprising burst mode transmitters 42 for generating the added traffic.

In the embodiment of Figure 1, a receiver 32 and a transmitter 42 are fixedly connected to a given transit path 4. Figure 2 illustrates another embodiment of the drop module 131 and the add module 141 in which a fast-switching optical matrix 33, resp. 43, is arranged between the plurality of drop couplers 30, resp. add couplers 40, and the plurality of receivers 32, resp. transmitters 42. The fast-switching optical matrices 33 and 43 operate on the same time scale as the optical gate 8, on an individual packet time scale, to enable sharing of any given receiver 32 or transmitter 42 between the transit paths 4 in the course of time. Such sharing makes it possible to improve the rate of occupation of the transponder, and therefore reduce capital expenditures needed for providing a given add and drop capacity.

In Figure 2, through the fast switching optical matrices 33 and 43, one given burst mode transponder 32 or 42 can see one packet on one transit path 4 and then another packet on another transit path 4 at a subsequent timeslot, i.e. after a very short period of time corresponding to an inter packet guard band. When several burst mode transponders are connected to the same matrix 33 or 43 as shown in figure 2, this matrix should be hitless, i.e. it should be able to switch the packets between a pair of input and output ports without disturbing or impacting the other optical connexions already set up between the other pairs of input and output ports.

In an embodiment, the matrices 33 and 43 have a plural number P of transponder-side ports and a plural number R of network-side ports, where the size may be 1≤P≤10 and 2≤R≤20. In an embodiment, the matrices 33 and 43 are built with SOA technology.

With reference to Figure 4, a transparent optical packet router 50 built with a plurality of the OPADM blocks 10 will now be described. Each OPADM block 10 is connected in a multidirectional manner.

The optical packet router 50 has a degree-4 connectivity. Namely it has four WDM input lines 51 and four WDM output lines 52 and can be connected with four respective neighboring nodes in a transparent network. The optical packet router 50 can be used in a transparent network or transparent network island with any topology, e.g. mesh, ring, star, tree and others. The same type of architecture could be used for making an optical node with a different, higher or lower degree of connectivity.

As shown, each WDM input line 51 may comprise an optical amplifier 53 and each WDM output line 52 may comprise an optical amplifier 54 to compensate for the losses of the node components.

Each input line 51 is connected to send the WDM traffic to a respective distributing component 55 that may be a power splitter or a WSS. Each output line 52 is connected to receive WDM traffic from a combining component 56, which may be a power coupler or a WSS. At least one of components 55 and 56 must be wavelength selective if signals having a same wavelength are used on several input lines 51, which is generally the case. Between the components 55 and 56, a plurality of OPADM blocks 10 are connected, each being arranged to process packet traffic. Namely, an OPADM block 10 has a respective WDM input 2 connected to each of the distributing components 55 through a respective input link 57 and a respective WDM output 7 connected to each of the combining components 56 through a respective output link 58. In such arrangement, an OPADM block 10 is capable of forwarding optical packets from any of the input lines 51 to any of the output lines 52, dropping optical packets from any of the input lines 51 and adding optical packets to any of the output lines 52. The components shown on Figure 4 form a transparent layer of the optical packet router 50.

The OPADM block 10 as described above does not exhibit wavelength contention. Namely, as a function of a configuration state of the WSS modules, any wavelength channel from any input line 51 can access any transit path 4 from any OPADM block 10 at any time provided that this transit path is not occupied by another packet stream, regardless of the other wavelength channels that may be already routed through the other transit paths 4 of the same OPADM block 10.

As a consequence, the optical packet router 50 may be equipped gradually with a growing number of OPADM blocks 10 over time, as a function of a growth in traffic capacity requirements. For instance, an operator may initially start with only one OPADM block 10 and only a few transit paths 4 in such block. When the capacity demand grows, it can add further transit paths 4 in the OPADM block already installed. Further, when the capacity of the first OPADM block 10 falls short of needs, it can add an additional OPADM block 10. During such upgrading steps, the operator may optimize the use of OPADM resources because reallocation of the deployed transit paths 4 to different channels or sources or destinations is possible without any spatial or spectral constraints. Therefore a very flexible pay-as-you-grow feature is obtained to gradually increase capacity.

Figure 4 also illustrates embodiments of the OPADM block 10, in which one or more transit paths 9 are direct connections deprived from the optical gate 8 or add and drop couplers 30 and 40. Such direct transit paths 9 are suitable to forward transit traffic, especially circuit mode-traffic that does not require packet by packet processing.

In embodiments, the transparent architecture of optical packet router 50 makes it suitable to handle both packet traffic and circuit mode traffic in the WDM layer. For circuit mode optical connections, one or more drop ports 60 may be provided in the distributing components 55 to direct corresponding optical signals to a circuit-mode drop module not shown. Similarly, one or more add ports 61 may be provided in the combining components 56 to receive corresponding optical signals from a circuit-mode add module not shown and combine them with transit.

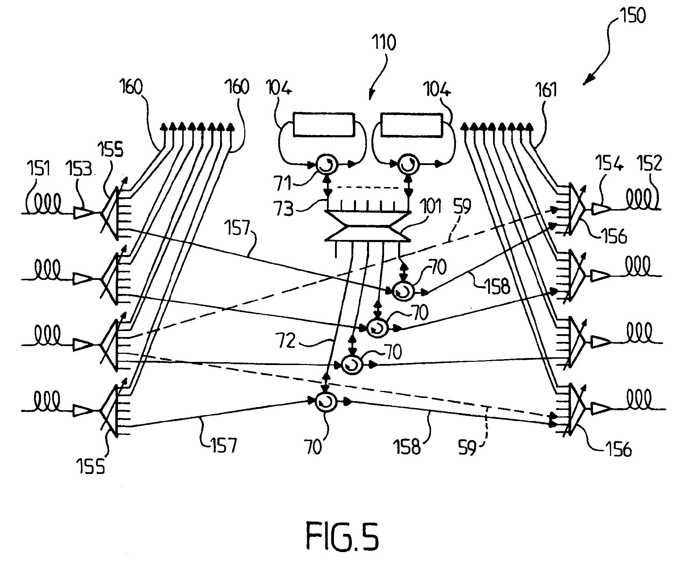

For circuit-mode transit traffic, a plurality of transit lines may be connected to pass corresponding optical signals directly from any of the distributing components 55 to any of the combining components 56, although it is ordinarily not necessary to provide a transit line between a pair of input and output lines that connect to a same neighboring node. Such transit lines 59 are schematically illustrated in Figure 5 and may be arranged in the same manner in the embodiment of Figure4.

With reference to Figure 5, a second embodiment of the optical packet router will be described. Elements identical or similar to those of Figure 4 are designated by the same numeral as in Figure 4 augmented by 100 and will not be described again.

In the optical packet router 150, three-port optical circulators 70 and 71 are arranged so as to exploit the M-by-N WSS module 101 in a bidirectional manner. Therefore, the WSS module 101 of an OP ADM block 110 fulfills the functions of both WSS modules 1 and 5 of an OPADM block 10. Hence, it is possible to reduce a total number of M-by-N WSS modules vs. the expense of the optical circulators.

In operations, the bidirectional link 72 connects the circulator 70 to a WDM port of the WSS module 101 so as to carry optical packets from an input link 157 toward the OPADM block 110 and from the OPADM block 110 toward an output link 158. In the OPADM block 110, the transit path 104 is configured as a loop of which both ends are connected to a same transit-side port of the WSS module 101 through the bidirectional link 73 and the circulator 71.

In the embodiment of Figure 5, all the distributing components 155 and the combining components 156 are 1-by-P WSSs, where P is a plural number, e.g. P=7 as shown.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A WDM optical packet switching block (10, 110), comprising:
a first multiport-to-multiport WSS module (1, 101) comprising:
a plurality of WDM input ports (2) each adapted to receive an input WDM signal comprising optical packets carried on a plurality of wavelength channels, and
a plurality of transit-side ports (3) each allocable to a wavelength channel,
a plurality of packet transit paths (4, 104), each packet transit path comprising:
an input section connected to a respective transit-side port of the first multiport-to-multiport WSS module for receiving optical packets carried on the allocated wavelength channel,
a selective element (8) switchable to selectively pass or block an individual optical packet carried on the allocated wavelength channel and received in the input section, and
an output section for transmitting optical packets passed by the selective element,
wherein the first multiport-to-multiport WSS module is operable to route independently each wavelength channel of each input WDM signal between the corresponding WDM input port and any one of the transit-side ports, wherein the first multiport-to-multiport WSS module is configured to independently allocate a wavelength channel to each of the transit-side ports, so that the wavelength channels allocated to two transit-side ports may be different or identical, and
a second multiport-to-multiport WSS module (5, 101) comprising:
a plurality of transit-side ports (6), the output section of each packet transit path being connected to a respective transit-side port of the second multiport-to-multiport WSS for transmitting the optical packets passed by the selective element on the allocated wavelength channel, and
a plurality of WDM output ports (7) each adapted to pass an output WDM signal comprising optical packets carried on a plurality of wavelength channels,
wherein the second multiport-to-multiport WSS module is operable to route independently the wavelength channel allocated to a transit path between the corresponding transit-side port and any one of the WDM output ports, wherein the second multiport-to-multiport WSS module is configured to route the wavelength channel received each of the transit-side ports to a selected one of the WDM output ports.

2. The WDM optical packet switching block in accordance with claim 1, wherein the first multiport-to-multiport WSS module (1, 101) is configured to allocate a plurality of identical wavelength channels coming from different ones of the WDM input ports to a plurality of the transit-side ports of the first multiport-to-multiport WSS module, and
wherein the second multiport-to-multiport WSS module (5, 101) is configured to route the plurality of identical wavelength channels from the corresponding transit-side ports of the second multiport-to-multiport WSS module to different ones of the WDM output ports.

3. The WDM optical packet switching block in accordance with claim 1 or 2, wherein a multiport-to-multiport WSS module (20) comprises:
a plural number N of 1-by-M wavelength selective switches (23), each 1-by-M wavelength selective switch comprising a common port arranged at a WDM port of the multiport-to-multiport WSS module and a plural number M of selectable ports,
a plural number M of N-by-1 spatial selectors (24), each N-by-1 spatial selector comprising a common port arranged at a transit-side port of the multiport-to-multiport WSS module and a plural number N of selectable ports, and
a plural number MxN of optical links (25) connecting the M selectable ports of each 1-by-M wavelength selective switch to the M spatial selectors, so as to produce a plurality of optical paths as a function of a configuration state of the spatial selectors and wavelength selective switches, each optical path adapted to carry optical signals on a plurality of wavelength channels between a selected one of the WDM ports and a selected one of the transit-side ports.

4. The WDM optical packet switching block in accordance with claim 1 or 2, wherein a multiport-to-multiport WSS module (1, 5, 101) comprises a fully non-blocking N-by-M wavelength selective switch comprising a plural number N of WDM ports and a plural number M of transit-side ports, wherein the fully non-blocking N-by-M wavelength selective switch is capable of simultaneously passing a plurality of selected wavelength channels between different ones of the WDM ports and one of the transit ports.

5. The WDM optical packet switching block in accordance with any one of claims 1 to 4, wherein each packet transit path (4, 104) further comprises a dropping optical coupler (30) arranged in the input section to pass an optical packet entering the packet transit path to an optical packet receiver (32) adapted to demodulate the optical packet.

6. The WDM optical packet switching block in accordance with claim 5, further comprising a drop-side optical switch (33) comprising a plurality of input ports connected to a plurality of the dropping optical couplers and at least one output port connected to an optical packet receiver, wherein the drop-side optical switch is reconfigurable to successively pass optical packets coming from different ones of the packet transit paths to the optical packet receiver.

7. The WDM optical packet switching block in accordance with any one of claims 1 to 6, wherein each packet transit path further comprises an adding optical coupler (40) arranged in the output section to pass an optical packet from an optical packet transmitter (42) to the output section of the packet transit path.

8. The WDM optical packet switching block in accordance with claim 7, further comprising an add-side optical switch (43) comprising a plurality of output ports connected to a plurality of the adding optical couplers and at least one input port connected to an optical packet transmitter, wherein the add-side optical switch is reconfigurable to successively pass optical packets coming from the optical packet transmitter to different ones of the packet transit paths.

9. The WDM optical packet switching block (10) in accordance with any one of claims 1 to 8, further comprising a circuit-mode transit path (9) connecting a transit-side port of the first multiport-to-multiport WSS module to a transit-side port of the second multiport-to-multiport WSS module for passing one or more circuit-mode optical signals carried on one or more wavelength channels.

10. The WDM optical packet switching block in accordance with any one of claims 1 to 9, wherein the selective element (8) comprises a semiconductor optical amplifier arranged as an optical gate on the corresponding packet transit path.

11. An optical network element (50, 150) for a WDM network, the optical network element comprising:
a WDM optical packet switching block (10, 110) in accordance with any one of claims 1 to 10,
a plurality of WDM inputs (51, 151) connectable to a plurality of adjacent nodes of the network for receiving optical signals on a plurality of wavelength channels, and
a plurality of WDM outputs (52, 152) connectable to the plurality of adjacent nodes for passing optical signals on the plurality of wavelength channels to the adjacent nodes of the network,
wherein the WDM input ports (2) of the WDM optical packet switching block are each connected to a WDM input of the optical network element and wherein the WDM output ports (7) of the WDM optical packet switching block are each connected to a WDM output of the optical network element.

12. The optical network element in accordance with claim 11, further comprising a second WDM optical packet switching block (10, 110) in accordance with any one of claims 1 to 10,
a distributing component (55, 155) arranged at each WDM input of the optical network element, the distributing component comprising first and second outputs (57, 157) for distributing the optical signals received at the WDM input to a WDM input port of the first WDM optical packet switching block and to a WDM input port of the second WDM optical packet switching block, and
a combining component (56, 156) arranged at each WDM output of the optical network element, the combining component comprising first and second inputs (58, 158) for combining optical signals received from a WDM output port of the first WDM optical packet switching block and from a WDM output port of the second WDM optical packet switching block.

13. The optical network element in accordance with claim 12, wherein at least one of the distributing component (55, 155) arranged at each WDM input and the combining component (56, 156) arranged at each WDM output comprises a wavelength selective switch.

14. The optical network element in accordance with any one of claims 12 to 13, further comprising a transparent circuit-mode transit path (59) arranged to connect an output of a distributing component (55, 155) to an input of a combining component (56, 156) for passing circuit-mode optical signals carried on a plurality of wavelengths channels.

15. The optical network element (150) in accordance with any one of claims 11 to 14,
wherein the WDM optical packet switching block (110) comprises a single multiport-to-multiport WSS module (101) comprising a plurality of transit-side ports (73) and a plurality of WDM ports (72), the multiport-to-multiport WSS module being operated in a bidirectional manner to provide the first multiport-to-multiport WSS module in a first direction of operations and the second multiport-to-multiport WSS module in a second direction of operations,
wherein each packet transit path (104) further comprises an optical circulator (71) having a bidirectional port connected to a corresponding transit-side port (73) of the single multiport-to-multiport WSS module (101), an output port connected to the input section and an input port connected to the output section, and
wherein the optical network element further comprises an optical circulator (70) associated to each WDM port (72) of the multiport-to-multiport WSS module, the optical circulator having a bidirectional port connected to the WDM port of the multiport-to-multiport WSS module, an input port (157) connected to a WDM input of the optical network element, and an output port (158) connected to a WDM output of the optical network element.

## Patentansprüche

1. Optischer WDM-Paketvermittlungs-Schaltblock (10, 110), umfassend:
ein erstes Multiport-to-Multiport-WSS-Modul (1, 101), umfassend:
eine Vielzahl von WDM-Eingangsports (2), jeder von ihnen ausgelegt für den Empfang eines Eingangs-WDM-Signals, welches optische Pakete umfasst, die auf einer Vielzahl von Wellenlängenkanälen transportiert werden, und
eine Vielzahl von transitseitigen Ports (3), jeder von ihnen einem Wellenlängenkanal zuweisbar,
eine Vielzahl von Paket-Transitpfaden (4, 104), wobei jeder Paket-Transitpfad umfasst:
einen Eingangsabschnitt, verbunden mit einem entsprechenden, transitseitigen Port des ersten Multiport-to-Multiport-WSS-Moduls zum Zweck des Empfangs potischer Pakete, die auf dem zugewiesenen Wellenlängenkanal transportiert werden,
ein selektives Element (8), schaltbar für das selektive weiterleiten oder Blockieren eines individuellen optischen Pakets, das auf dem zugewiesenen Wellenlängenkanal transportiert und im Eingangsabschnitt empfangen wird, und
einen Ausgangsabschnitt für das Übertragen optischer Pakete, die von dem selektiven Element weitergeleitet wurden,
wobei das erste Multiport-to-Multiport-WSS-Modul ausgelegt ist für das unabhängig voneinander erfolgende Routen eines jeden Wellenlängenkanals eines jeden Eingangs-WDM-Signals zwischen dem entsprechenden WDM-Eingangsport und einem beliebigen der transitseitigen Ports, wobei das erste Multiport-to-Multiport-WSS-Modul konfiguriert ist für das unabhängige Zuweisen eines Wellenlängenkanals zu jedem der transitseitigen Ports, dergestalt, dass die den beiden transitseitigen Ports zugewiesenen Wellenlängenkanäle unterschiedlich oder identisch sein können, und
ein zweites Multiport-to-Multiport-WSS-Modul (5, 101), umfassend:
eine Vielzahl von transitseitigen Ports (6), wobei der Ausgangsabschnitt eines jeden Paket-Transitpfads mit einem entsprechenden transitseitigen Port des zweiten Multiport-to-Multiport-WSS-Moduls verbunden ist, um die optischen Pakete zu übermitteln, die von dem selektiven Element auf dem zugewiesenen Wellenlängenkanal weitergeleitet wurden, und
eine Vielzahl von WDM-Ausgangsports (7), jeder von ihnen ausgelegt für das Weiterleiten eines Ausgangs-WDM-Signals, welches optische Pakete umfasst, die auf einer Vielzahl von Wellenlängenkanälen transportiert werden,
wobei das zweite Multiport-to-Multiport-WSS-Moduls ausgelegt ist für das unabhängig voneinander erfolgende Routen des einem Transitpfad zugewiesenen Wellenlängenkanals zwischen dem entsprechenden transitseitigen Port und einem jeglichen der WDM-Ausgangsports, wobei das zweite Multiport-to-Multiport-WSS-Modul konfiguriert ist für das Routen des an einem jeden der transitseitigen Ports empfangenen Wellenlängenkanals zu einem ausgewählten der WDM-Ausgangsports.

2. Der optische WDM-Paketvermittlungs-Schaltblock nach Anspruch 1, wobei das erste Multiport-to-Multiport-WSS-Modul (1, 101) konfiguriert ist für das Zuweisen einer Vielzahl identischer, von verschiedenen der WDM-Eingangsports stammender Wellenlängenkanäle zu einer Vielzahl von transitseitigen Ports des ersten Multiport-to-Multiport-WSS-Moduls, und
wobei das zweite Multiport-to-Multiport-WSS-Modul (5, 101) konfiguriert ist für das Routen der Vielzahl identischer Wellenlängenkanäle von den entsprechenden, transitseitigen Ports des zweiten Multiport-to-Multiport-WSS-Moduls zu den verschiedenen WDM-Ausgangsports.

3. Der optische WDM-Paketvermittlungs-Schaltblock nach Anspruch 1 oder 2, wobei ein Multiport-to-Multiport-WSS-Modul (20) umfasst:
eine Anzahl N wellenlängenselektiver 1-mal-M-Schalter (23), wobei jeder wellenlängenselektive 1-mal-M-Schalter einen gemeinsamen Port umfasst, der an einem WDM-Port des Multiport-to-Multiport-WSS-Moduls sowie an einer Anzahl M auswählbarer Ports angeordnet ist,
eine Anzahl M räumlicher N-mal-1-Selektoren (24), wobei jeder räumliche N-mal-1-Selektor einen gemeinsamen Port umfasst, der an einem transitseitigen Port des Multiport-to-Multiport-WSS-Moduls und einer Anzahl N auswählbarer Ports angeordnet ist, und
eine Anzahl MxN optischer Links (25), welche die M auswählbaren Ports eines jeden der wellenlängenselektiven 1-mal-M Schalter mit den M räumlichen Selektoren verbinden, dergestalt, dass eine Vielzahl optischer Pfade als Funktion eines Konfigurationszustands der räumlichen Selektoren und wellenlängenselektiven Schalter produziert wird, wobei jeder optische Pfad ausgelegt ist für das Transportieren optischer Signale auf einer Vielzahl von Wellenlängenkanälen zwischen einem ausgewählten der WDM-Ports und einem ausgewählten der transitseitigen Ports.

4. Der optische WDM-Paketvermittlungs-Schaltblock nach Anspruch 1 oder 2, wobei ein Multiport-to-Multiport-WSS-Modul (1, 5, 101) einen vollständig nichtblockierenden, wellenlängenselektiven N-mal-M Schalter umfasst, der eine Anzahl N von WDM-Ports und eine Anzahl M von transitseitigen Ports umfasst, wobei der vollständig nichtblockierende, wellenlängenselektive N-mal-M Schalter dafür ausgelegt ist, um simultan eine Vielzahl ausgewählter Wellenlängenkanäle zwischen verschiedenen der WDM-Ports und einem der Transitports weiterzugeben.

5. Der optische WDM-Paketvermittlungs-Schaltblock nach einem jeglichen der Ansprüche 1 bis 4, wobei jeder Pakettransitpfad (4, 104) weiterhin einen optischen Drop-Koppler (30) umfasst, angeordnet im Eingangsabschnitt, um ein im Paket-Transitpfad eingehendes, optisches Paket an einen Empfänger optischer Pakete (32) weiterzuleiten, der für das Demodulieren des optischen Pakets ausgelegt ist.

6. Der optische WDM-Paketvermittlungs-Schaltblock nach Anspruch 5, weiterhin einen dropseitigen optischen Schalter (33) umfassend, der eine Vielzahl von Eingangsports umfasst, die mit einer Vielzahl der optischen Drop-Koppler und mindestens einem mit einem Empfänger optischer Pakete verbundenen Ausgangsport verbunden sind, wobei der dropseitige optische Schalter rekonfigurierbar ist für das sukzessive Weiterleiten optischer Pakete, die von verschiedenen der Paket-Transitpfade stammen, an den Empfänger optischer Pakete.

7. Der optische WDM-Paketvermittlungs-Schaltblock nach einem jeglichen der Ansprüche 1 bis 6, wobei jeder Pakettransitpfad weiterhin einen optischen Add-Koppler (40) umfasst, angeordnet im Ausgangsabschnitt, um ein optisches Paket von einem Sender optischer Pakete (42) an den Ausgangsbereich des Paket-Transitpfads weiterzuleiten.

8. Der optische WDM-Paketvermittlungs-Schaltblock nach Anspruch 7, weiterhin einen addseitigen optischen Schalter (43) umfassend, der eine Vielzahl von Ausgangsports umfasst, die mit einer Vielzahl der optischen Add-Koppler und mindestens einem mit einem Sender optischer Pakete verbundenen Eingangsport verbunden sind, wobei der addseitige optische Schalter rekonfigurierbar ist für das sukzessive Weiterleiten optischer Pakete, die von dem Sender optischer Pakete stammen, an verschiedene der Paket-Transitpfade.

9. Der optische WDM-Paketvermittlungs-Schaltblock (10) nach einem jeglichen der Ansprüche 1 bis 8, weiterhin einen Schaltmodus-Transitionspfad (9) umfassend, welcher einen transitseitigen Port des ersten Multiport-to-Multiport-WSS-Moduls mit einem transitseitigen Port des zweiten Multiport-to-Multiport-WSS-Moduls verbindet, um ein oder mehrere optische Schaltmodus-Signale weiterzuleiten, die auf einem oder mehreren Wellenlängenkanälen transportiert werden.

10. Der optische WDM-Paketvermittlungs-Schaltblock nach einem jeglichen der Ansprüche 1 bis 9, wobei das selektive Element (8) ein optischen Halbleiterverstärker umfasst, der als optisches Gate auf dem entsprechenden Paket-Transitpfad angeordnet ist.

11. Ein optisches Netzwerkelements (50, 150) für ein WDM-Netzwerk, wobei das optische Netzwerkelement umfasst:
einen optischen WDM-Paketvermittlungs-Schaltblock (10, 110) nach einem jeglichen der Ansprüche 1 bis 10,
eine Vielzahl von WDM-Eingängen (51, 151), verbindbar mit einer Vielzahl angrenzender Knoten des Netzwerks zum Empfangen optischer Signale auf einer Vielzahl von Wellenlängenkanälen, und
eine Vielzahl von WDM-Ausgängen (52, 152), verbindbar mit der Vielzahl angrenzender Knoten zum Weiterleiten optischer Signale auf der Vielzahl von Wellenlängenkanälen an die angrenzenden Knoten des Netzwerks,
wobei die WDM-Eingangsports (2) des optischen WDM-Paketvermittlungs-Schaltblocks jeweils mit einem WDM-Eingang des optischen Netzwerkelements verbunden sind und wobei die WDM-Ausgangsports (7) des optischen WDM-Paketvermittlungs-Schaltblocks jeweils mit einem WDM-Ausgang des optischen Netzwerkelements verbunden sind.

12. Das optische Netzwerkelement nach Anspruch 11, weiterhin einen zweiten optischen WDM-Paketvermittlungs-Schaltblock (10, 110) nach einem jeglichen der Ansprüche 1 bis 10 umfassend,
eine Verteilerkomponente (55, 155), angeordnet an einem jeden WDM-Eingang des optischen Netzwerkelements, wobei die Verteilerkomponente erste und zweite Ausgänge (57, 157) für das Verteilen der am WDM-Eingang empfangenen optischen Signale an einen WDM-Eingangsports des ersten optischen WDM-Paketvermittlungs-Schaltblocks und an einen WDM-Eingangsport des zweiten optischen WDM-Paketvermittlungs-Schaltblocks, und
eine Kombinierungskomponente (56, 156), angeordnet an jedem WDM-Ausgang des optischen Netzwerkelements, wobei die Kombinierungskomponente erste und zweite Eingänge (58, 158) für das Kombinieren optischer Signale umfasst, die von einem WDM-Ausgangsport des ersten optischen WDM-Paketvermittlungs-Schaltblocks und von einem WDM-Ausgangsport des zweiten optischen WDM-Paketvermittlungs-Schaltblocks empfangen werden.

13. Das optische Netzwerkelement nach Anspruch 12, wobei mindestens eine der Verteilerkomponenten (55, 155) an jedem WDM-Eingang angeordnet ist und die Kombinierungskomponente (56,156) an jedem WDM-Ausgang einen wellenlängenselektiver Schalter umfasst.

14. Das optische Netzwerkelement nach einem jeglichen der Ansprüche 12 bis 13, weiterhin einen transparenten Schaltmodus-Transitionspfad (59) umfassend, angeordnet für das Verbinden eines Ausgangs einer Verteilerkomponente (55, 155) mit einem Eingang einer Kombinierungskomponente (56, 156) für das Weiterleiten optischer Schaltmodussignale, die auf einer Vielzahl von Wellenlängenkanälen transportiert werden.

15. Das optische Netzwerkelement (150) gemäß einem jeglichen der Ansprüche 11 bis 14,
wobei der optische WDM-Paketvermittlungs-Schaltblock (110) ein einzelnes Multiport-to-Multiport-WSS-Modul (101) umfasst, welches eine Vielzahl transitseitiger Ports (73) und eine Vielzahl von WDM-Ports (72) umfasst, wobei das Multiport-to-Multiport-WSS-Modul in bidirektionaler Weise betrieben wird, um dem ersten Multiport-to-Multiport-WSS-Modul in eine erste Operationsrichtung und das zweite Multiport-to-Multiport-WSS-Modul in eine zweite Operationsrichtung zu versorgen,
wobei jeder Paket-Transitpfad (104) weiterhin einen optischen Zirkulator (71) umfasst, der über einen bidirektionalen Port mit einem entsprechenden transitseitigen Port (73) des einzelnen Multiport-to-Multiport-WSS-Moduls (101) verbunden ist, und der weiterhin über einen Ausgangsport verfügt, der mit dem Eingangsabschnitt verbunden ist, sowie über einen Eingangsport, der mit dem Ausgangsabschnitt verbunden ist.
Wobei das optische Netzwerkelement weiterhin einen optischen Zirkulator (70) umfasst, der mit jedem WDM-Port (72) des Multiport-to-Multipork-WSS-Moduls assoziiert ist, wobei der optische Zirkulator über einen bidirektionalen Port mit dem WDM-Port des Multiport-to-Multiport-WSS-Moduls verbunden ist, wobei ein Eingangsport (157) mit dem WDM-Eingang des optischen Netzwerkelements und ein Ausgangsport (158) mit dem WDM-Ausgang des optischen Netzwerkelements verbunden ist.

## Revendications

1. Bloc de commutation optique par paquets WDM (10, 110), comprenant :
un premier module WSS multiport à multiport (1, 01) camprenant :
une pluralité de ports d'entrée WDM (2), chacun adapté pour recevoir un signal d'entrée WDM contenant des paquets optiques acheminés sur une pluralité de canaux de longueur d'onde, et
une pluralité de ports côté transit (3), chacun pouvant être alloué à un canal de longueur d'onde,
une pluralité de chemins de transit de paquet (4, 104), chaque chemin de transit de paquet comprenant :
une partie entrée connectée à un port correspondant côté transit du premier module WSS multiport à multiport pour recevoir des paquets optiques acheminés sur le canal de longueur d'onde alloué,
un élément de sélection (8) commutable destiné à transmettre ou bloquer sélectivement un paquet optique individuel acheminé sur le canal de longueur d'onde alloué et reçu dans la partie entrée, et
une partie sortie destinée à transmettre les paquets optiques que l'élément de sélection a laissé passer,
dans lequel le premier module WSS multiport à multiport permet de router indépendamment chaque canal de longueur d'onde de chaque signal d'entrée WDM entre le port d'entrée WDM correspondant et l'un quelconque des ports côté transit, dans lequel le premier module WSS multiport à multiport est configuré pour allouer indépendamment un canal de longueur d'onde à chacun des ports côté transit, de sorte que les canaux de longueur d'onde alloués à deux ports côté transit puissent être différents ou identiques, et un deuxième module WSS multiport à multiport (5, 101) comprenant :
une pluralité de ports côté transit (6), la partie sortie de chaque chemin de transit de paquet étant connectée à un port correspondant côté transit du deuxième module WSS multiport à multiport afin de transmettre les paquets optiques que l'élément de sélection a laissé passer sur le canal de longueur d'onde alloué, et
une pluralité de ports de sortie WDM (7), chacun adapté pour transmettre un signal de sortie WDM comprenant des paquets optiques acheminés sur une pluralité de canaux de longueur d'onde,
dans lequel le deuxième module WSS multiport à multiport permet de router indépendamment le canal de longueur d'onde alloué à un chemin de transit entre le port correspondant côté transit et l'un quelconque des ports de sortie WDM, dans lequel le deuxième module WSS multiport à multiport est configuré pour router le canal de longueur d'onde reçu sur chacun des ports côté transit vers un port sélectionné parmi les ports de sortie WDM.

2. Bloc de commutation optique par paquets WDM selon la revendication 1, dans lequel le premier module WSS multiport à multiport (1, 101) est configuré pour allouer une pluralité de canaux de longueur d'onde identiques provenant de ports différents parmi les ports d'entrée WDM à une pluralité de ports côté transit du premier module WSS multiport à multiport, et
dans lequel le deuxième module WSS multiport à multiport (5, 101) est configuré pour router la pluralité de canaux de longueur d'onde identiques des ports correspondants côté transit du second module WSS multiport à multiport vers des ports différents parmi les ports de sortie WDM.

3. Bloc de commutation optique par paquets WDM selon les revendications 1 ou 2, dans lequel un module WSS multiport à multiport (20) comprend :
un nombre N supérieur à un de commutateurs de sélection de longueur d'onde 1 vers M (23), chaque commutateur de sélection de longueur d'onde 1 vers M comprenant un port commun disposé au niveau d'un port WDM du module WSS multiport à multiport et un nombre M supérieur à un de ports sélectionnables,
un nombre M supérieur à un de sélecteurs spatiaux N vers 1 (24), chaque sélecteur spatial N vers 1 comprenant un port commun disposé au niveau d'un port côté transit du module WSS multiport à multiport et un nombre N supérieur à un de ports sélectionnables, et
un nombre M x N supérieur à un de liaisons optiques (25) connectant les M ports sélectionnables de chaque commutateur de sélection de longueur d'onde 1 vers M aux M sélecteurs spatiaux, de sorte à générer une pluralité de chemins optiques en tant que fonction d'un état de configuration des sélecteurs spatiaux et des commutateurs de sélection de longueur d'onde, chaque chemin optique étant adapté pour acheminer des signaux optiques sur une pluralité de canaux de longueur d'onde entre un port sélectionné parmi les ports WDM et un port sélectionné parmi les ports côté transit.

4. Bloc de commutation optique par paquets WDM selon les revendications 1 ou 2, dans lequel un module WSS multiport à multiport (1, 5, 101) comprend un commutateur de sélection de longueur d'onde N vers M totalement non bloquant comprenant un nombre N supérieur à un de ports WDM et un nombre M supérieur à un de ports côté transit, dans lequel le commutateur de sélection de longueur d'onde N vers M totalement non bloquant est capable de transmettre simultanément une pluralité de canaux de longueur d'onde sélectionnés entre des ports différents parmi les ports WDM et l'un des ports de transit.

5. Bloc de commutation optique par paquets WDM selon l'une quelconque des revendications 1 à 4, dans lequel chaque chemin de transit de paquet (4, 104) comprend en outre un coupleur optique d'extraction (30) disposé dans la partie entrée pour transmettre un paquet optique entrant dans le chemin de transit de paquet vers un récepteur de paquet optique (32) adapté pour démoduler le paquet optique.

6. Bloc de commutation optique par paquets WDM selon la revendication 5, comprenant en outre un commutateur optique côté extraction (33) comprenant une pluralité de ports d'entrée connectés à une pluralité des coupleurs optiques d'extraction et au moins un port de sortie connecté à un récepteur de paquet optique, dans lequel le commutateur optique côté extraction est reconfigurable pour transmettre successivement les paquets optiques provenant de différents chemins parmi les chemins de transit vers le récepteur de paquet optique.

7. Bloc de commutation optique par paquets WDM selon l'une quelconque des revendications 1 à 6, dans lequel chaque chemin de transit de paquet comprend en outre un coupleur optique d'insertion (40) disposé dans la partie sortie pour transmettre un paquet optique d'un émetteur de paquet optique (42) vers la partie sortie du chemin de transit de paquet.

8. Bloc de commutation optique par paquets WDM selon la revendication 7, comprenant en outre un commutateur optique côté insertion (43) comprenant une pluralité de ports de sortie connectés à une pluralité des coupleurs optiques d'insertion et au moins un port d'entrée connecté à un émetteur de paquet optique, dans lequel le commutateur optique côté insertion est reconfigurable pour transmettre successivement les paquets optiques provenant de l'émetteur de paquet optique vers différents chemins parmi les chemins de transit de paquet.

9. Bloc de commutation optique par paquets WDM (10) selon l'une quelconque des revendications 1 à 8, comprenant en outre un chemin de transit en mode circuit (9) connectant un port côté transit du premier module WSS multiport à multiport à un port côté transit du deuxième module WSS multiport à multiport pour transmettre un ou plusieurs signaux optiques en mode circuit acheminés sur un ou plusieurs canaux de longueur d'onde.

10. Bloc de commutation optique par paquets WDM selon l'une quelconque des revendications 1 à 9, dans lequel l'élément de sélection (8) comprend un amplificateur optique à semi-conducteur disposé en tant que porte optique sur le chemin de transit de paquet correspondant.

11. Élément de réseau optique (50, 150) pour un réseau WDM, l'élément de réseau optique comprenant :
un bloc de commutation optique par paquets WDM (10, 110) selon l'une quelconque des revendications 1 à 10,
une pluralité d'entrées WDM (51, 151) connectables à une pluralité de noeuds adjacents du réseau pour recevoir des signaux optiques sur une pluralité de canaux de longueur d'onde, et
une pluralité de sorties WDM (52, 152) connectables à la pluralité de noeuds adjacents pour transmettre des signaux optiques sur la pluralité de canaux de longueur d'onde vers les noeuds adjacents du réseau,
dans lequel les ports d'entrée WDM (2) du bloc de commutation optique par paquets WDM sont chacun connectés à une entrée WDM de l'élément de réseau optique et dans lequel les ports de sortie WDM (7) du bloc de commutation optique par paquets WDM sont chacun connectés à une sortie WDM de l'élément de réseau optique.

12. Élément de réseau optique selon la revendication 11, comprenant en outre un deuxième bloc de commutation optique par paquets WDM (10, 110) selon l'une quelconque des revendications 1 à 10,
un élément de distribution (55, 155) disposé à chaque entrée WDM de l'élément de réseau optique, l'élément de distribution comprenant des premières et deuxièmes sorties (57, 157) pour distribuer les signaux optiques reçus sur l'entrée WDM vers un port d'entrée WDM du premier bloc de commutation optique par paquets WDM et vers un port d'entrée WDM du deuxième bloc de commutation optique par paquets WDM, et
un élément de combinaison (56, 156) disposé à chaque sortie WDM de l'élément de réseau optique, l'élément de combinaison comprenant des premières et deuxièmes entrées (58, 158) pour combiner les signaux optiques reçus d'un port de sortie WDM du premier bloc de commutation optique par paquets WDM et d'un port de sortie WDM du deuxième bloc de commutation optique par paquets WDM.

13. Élément de réseau optique selon la revendication 12, dans lequel au moins un des éléments de distribution (55, 155) disposés à chaque entrée WDM et des éléments de combinaison (56, 156) disposés à chaque sortie WDM comprend un commutateur de sélection de longueur d'onde.

14. Élément de réseau optique selon l'une quelconque des revendications 12 à 13, comprenant en outre un chemin de transit transparent en mode circuit (59) disposé pour connecter une sortie d'un élément de distribution (55, 155) à une entrée d'un élément de combinaison (56, 156) pour transmettre les signaux optiques en mode circuit acheminés sur une pluralité de canaux de longueur d'onde.

15. Élément de réseau optique (150) selon l'une quelconque des revendications 11 à 14, dans lequel le bloc de commutation optique par paquets WDM (110) comprend un module WSS multiport à multiport unique (101) comprenant une pluralité de ports côté transit (73) et une pluralité de ports WDM (72), le module WSS multiport à multiport fonctionnant de manière bidirectionnelle pour alimenter le premier module WSS multiport à multiport dans un premier sens de fonctionnement et le deuxième module WSS multiport à multiport dans un deuxième sens de fonctionnement,
dans lequel chaque chemin de transit de paquet (104) comprend en outre un circulateur optique (71) doté d'un port bidirectionnel connecté à un port correspondant côté transit (73) du module WSS multiport à multiport unique (101), d'un port de sortie connecté à la partie entrée et d'un port d'entrée connecté à la partie sortie, et
dans lequel l'élément de réseau optique comprend en outre un circulateur optique (70) associé à chaque port WDM (72) du module WSS multiport à multiport, le circulateur optique étant doté d'un port bidirectionnel connecté au port WDM du module WSS multiport à multiport, d'un port d'entrée (157) connecté à une entrée WDM de l'élément de réseau optique, et d'un port de sortie (158) connecté à une sortie WDM de l'élément de réseau optique.
